# EUROPEAN PATENT SPECIFICATION

(11) **EP 1 738 012 B1**
(45) Date of publication and mention of the grant of the patent: **15.10.2008**
(21) Application number: 05789784.5
(22) Date of filing: 21.03.2005
(51) Int. Cl.: D06F 25/00, D06F 58/02

(54) **DRUM TYPE WASHING MACHINE WITH LAUNDRY DRYING FUNCTION**
TROMMELWASCHMASCHINE MIT WÄSCHETROCKNERFUNKTION
LAVE-LINGE SECHANT A TAMBOUR

(30) Priority: 19.04.2004 KR 2004026738
(43) Date of publication of application: 03.01.2007
(73) Proprietor: LG Electronics Inc., Seoul 150-721 (KR)
(72) Inventor: KIM, Jae Mun, Jinhae-si, Gyeongsangnam-do 645-801 (KR); KIM, Kwang Soo, Changwon-si, Gyeongsangnam-do 641-824 (KR)
(74) Representative: Vossius & Partner
(86) International application number: PCT/KR2005/000808
(87) International publication number: WO 2006/004253

(56) References cited:
- JP-A- 1 249 093
- JP-A- 2000 342 881
- US-A- 3 531 954
- US-A- 5 121 615

## Description

### Technical Field

The present invention relates to drum type washing machines, and more particularly, to a drum type washing machine with a laundry drying function, in which a new flow passage structure is employed for improving a drying efficiency, and a drying performance.

### Background Art

In general, the drum type washing machine is an apparatus for washing laundry by rotating a drum with a driving force of a motor in a state detergent, washing water, and the laundry are introduced into the drum. The drum type washing machine has advantages in that damage to the laundry is small, entangling of the laundry is small, and a washing effect of pounding and rubbing can be made.

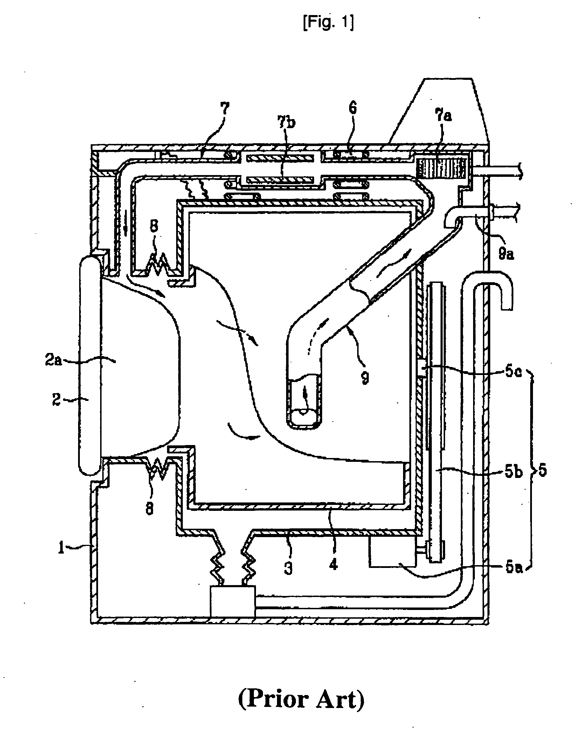

A related art drum type washing machine will be described in detail, with reference to FIG. 1. FIG. 1 illustrates a side section of a related art drum type washing machine, schematically.

Referring to FIG. 1, the related art drum type washing machine is provided with a cabinet 1 having a front opening for introduction of laundry, a door 2 mounted at the opening of the cabinet 1 for opening/closing the opening, a metal tub 3 in the cabinet 1 for holding washing water, a drum 4 rotatably mounted in the tub 3, and a motor unit 5 mounted on the tub 3, for providing driving force to the drum 4.

The door 2 has a glass 2a projected toward an opening of the tub 3.

There are hanging springs 6 between an inside of a top of the cabinet 1 and a top of an outside circumference of the tub 2, and, though not shown, there are dampers (not shown) between an inside of a bottom of the cabinet 1 and an underside of the outside circumference of the tub 2, for damping vibration of the tub 2 occurred during operation of the drum washing machine.

As the motor unit 5, an indirect coupling type is used mostly, in which the driving force is transmitted from a motor 5a to a washing shaft 5c via a belt 5b for rotating the drum 4.

In the meantime, there is a drying duct 7 in an upper portion of an inside of the cabinet 1. The drying duct 7 has a heater 7b and a fan 7a for producing hot air and forced blowing of the hot air.

One end of the drying duct 7 is connected to a gasket 8 connected between a circumference of the front opening of the tub 3, and a circumference of the door at the front of the cabinet 1.

That is, the gasket 8 is mounted along a front inside circumference of the tub 3, and has a bellows shape for absorbing vibration of the tub 3. According to this, leakage of hot air through a connection of the drying duct 7 and the tub 3 is prevented.

The tub 3 has a condensing duct 9 connected to the drying duct 7. The condensing duct 9 has one end connected to an outside of the tub 3, and the other end connected to the drying duct 7. The condensing duct 9 has a water supply device 9a mounted thereon for supplying cooling water to condense, and remove moisture from air.

The drum type washing machine performs a washing cycle, a rinsing cycle, a spinning cycle, and a drying cycle.

The drying cycle of the drum type washing machine will be described.

Upon starting the drying cycle of the drum type washing machine, power is applied to the heater 7b on the drying duct 7. As the fan 7a and the heater 7b are put into operation, the fan 7a blows hot air.

The hot air is guided by the drying duct 7, hits a sloped portion of the door glass 2a, and, therefrom, is introduced into an inside of the drum 4.

Then, the hot air heats laundry and vaporizes moisture from the laundry. In the instance, the drum 4 rotates slowly, to turn the laundry upside down, so that the laundry is exposed to the hot air uniformly, to help vaporization of the moisture.

The moisture vaporized thus is discharged through the condensing duct 9 carried by the air. In this instance, by spraying water from the water supply device 9a of the condensing duct 9, the moisture is removed from the air. The air having the moisture removed therefrom thus is introduced into the drying duct 7 again, and turned into hot air by the heater 7b and the fan 7a, and introduced into the drum 4 again, for performing drying of the laundry.

By repeating the foregoing process, the laundry is dried.

However, the related art drum type washing machine has problems in many aspects, such as the related art drum type washing machine has limitations in drying efficiency and drying performance because the related art drum type washing machine has a circulating structure in which the hot air is supplied to the inside of the drum through the connection portion of the drying duct at one side of an upper portion of the gasket, and discharged through a side of a front of the tub again.

First, because the air is discharged through the side of the front of the tub in a state the air supplied to the inside of the drum can not penetrate deep into the inside of the drum yet, drying of the laundry at the deep inside of the drum has not been adequate. Therefore, the related art flow passage structure has disadvantages of dropping the drying efficiency, and the drying performance.

Second, the gasket is liable to wear and tear because the gasket, which moves according to vibration of the tub, is connected to the drying duct which is fixedly secured, to require an expensive gasket 8 which has a relatively small thermal deformation, to increase a production cost.

The vertical downward discharge of the hot air from the drying gasket 7 through the gasket causes the problem that the hot air fails the penetration deep into the inside of the drum, because the vertical downward direction is away from a direction of the shaft of the drum, and the hot air hits the door glass to have a resistance from the door glass. In order to overcome this problem, a fan with a large capacity is required.

Moreover, as described before, because the hot air is introduced into the drum 4 through the drying duct 7, and the gasket 8, and deflected at the sloped portion of the door glass 2a, the door 2 is heated unnecessarily.

In the meantime, the connection of the drying duct 7 to an outside circumference of upper side of the gasket 8, making the gasket 8 asymmetric between an upper side and a lower side of the gasket 8, causes the gasket to fail in balanced holding of a front of n the tub 3.

JP-A-01 249 093 relates to a drum type washing drier.

### Disclosure of Invention

### Technical Problem

Accordingly, the present invention is directed to a drum type washing machine with a laundry drying function that substantially obviates one or more problems due to limitations and disadvantages of the related art.

An object of the present invention is to provide a drum type washing machine with a laundry drying function, which has a new improved flow passage structure for improving a drying efficiency and a drying performance.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Technical Solution

These objects and other advantages in accordance with the purpose of the invention are achieved by the features of the appended claims. As embodied and broadly described herein, a drum type washing machine having a laundry drying function includes a tub for receiving hot air through a front, and discharging the hot air through a rear, a drum rotatably mounted in the tub, a drying duct connected to a hot air inlet hole in the tub for guiding the hot air to a hot air inlet side of the tub, a heater for producing the hot air, and a fan for forced circulation of the hot air to a drum side, and a condensing duct for removing moisture from the hot air from the hot air outlet hole in a lower portion of the rear of the tub.

It is to be understood that both the foregoing general description and the following detailed description of the present invention are exemplary and explanatory and are intended to provide further explanation of the invention as claimed.

### Advantageous Effects

The drum type washing machine of the present invention having the drying system with a new flow passage structure has the following advantages.

First, the new drying system permits deep penetration of the air into an inside of the drum to dry all the laundry uniformly, to improve a drying efficiency, and a drying performance.

That is, the hot air, produced at the drying duct, is introduced into an upper portion of the drum, flows in a diagonal direction, and is discharged through a lower portion of a rear of the drum. According to this, the hot air penetrates deep into an inside of the drum, to improve a drying efficiency, and a drying performance.

Second, different from the related art drum type washing machine having a laundry drying function, the connection of the drying duct to the tub prevents the gasket from wear and tear.

The symmetric structure of the gasket in an upper side and a lower side enabled by the connection of the drying duct to the tub permits the gasket to absorb vibration of the tub, uniformly.

Next, different from the related art, as the hot air is introduced into the drum through the tub without passing through the gasket, the unnecessary heating of the door is prevented.

Fifth, the securing of the drying duct and the condensing duct to the tub permits to dispense with a separate gasket at the connection portion like the related art, and shortens an air flow passage of the ducts.

Sixth, the drying duct serves as a counterweight, to improve a balance of the tub.

Seventh, the hot air pass through holes are effectively arranged in the front of the drum taking strength of the drum, and a flow rate of the hot air introduced into the drum from the drying duct into account. Therefore, the flow rate of the hot air introduced into the drum can be maximized while the strength of the drum is maintained.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a side section of a related art drum type washing machine, schematically;

FIG. 2 illustrates a side section of a drum type washing machine in accordance with a preferred embodiment of the present invention;

FIG. 3 illustrates an exploded perspective view of key parts of FIG. 2; and

FIGS. 4 and 5 illustrate front views showing different embodiments of arrangements of hot air holes in a front of the drum in FIG. 2.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

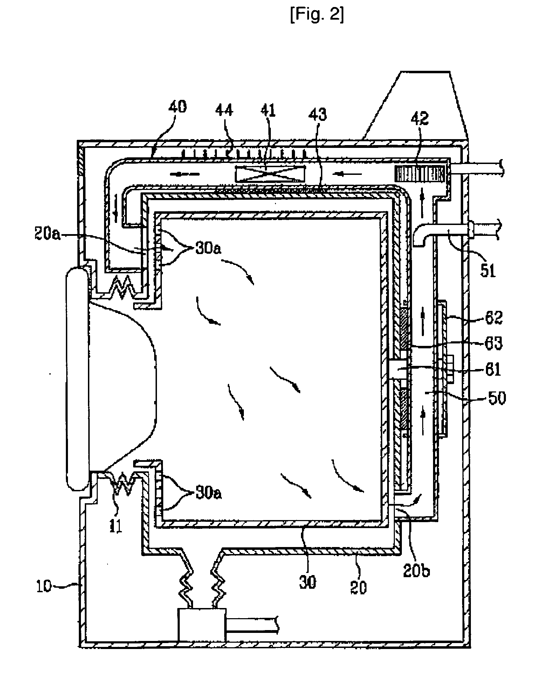

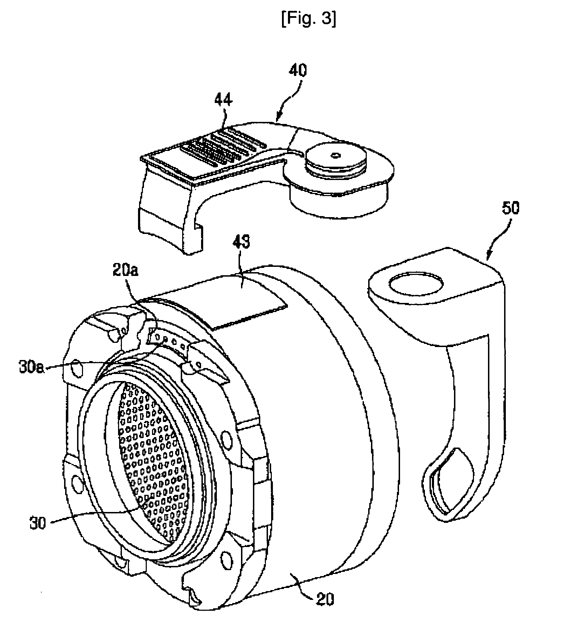

FIG. 2 illustrates a side section of a drum type washing machine in accordance with a preferred embodiment of the present invention, FIG. 3 illustrates an exploded perspective view of key parts of FIG. 2, and FIGS. 4 and 5 illustrate front views showing different embodiments of arrangements of hot air holes in a front of the drum in FIG. 2.

Referring to FIGS. 2 and 3, the drum type washing machine in accordance with a preferred embodiment of the present invention includes a tub 20 in a cabinet 10 for holding washing water, having hot air inlet hole 20a in an upper portion of a front, and hot air outlet hole 20b in a lower portion of a rear, a drum 30 rotatably mounted in the tub 20, having a plurality of hot air pass through holes 30a of a predetermined array in a front, a drying duct 40 fixedly secured to an outside circumference of an upper portion of the tub 20, having a heater 41 and a fan 42 mounted therein for producing hot air, and one end connected to the hot air inlet holes in the tub 20 for supplying the hot air from the drying duct 40 to the drum 30, and a condensing duct 50 mounted in rear of the tub 20 such that one end thereof is connected to the hot air outlet hole 20b at the lower portion of the rear of the tub 20, and the other end thereof is connected to the drying duct 40, for removing moisture from the air discharged from the tub 20.

It is preferable that the tub 20 is a plastic injection molding, and the drum 30 is formed of stainless steel.

The hot air pass through holes 30a in the drum 30 are arranged in a radial direction, on the whole (see 4, and 5).

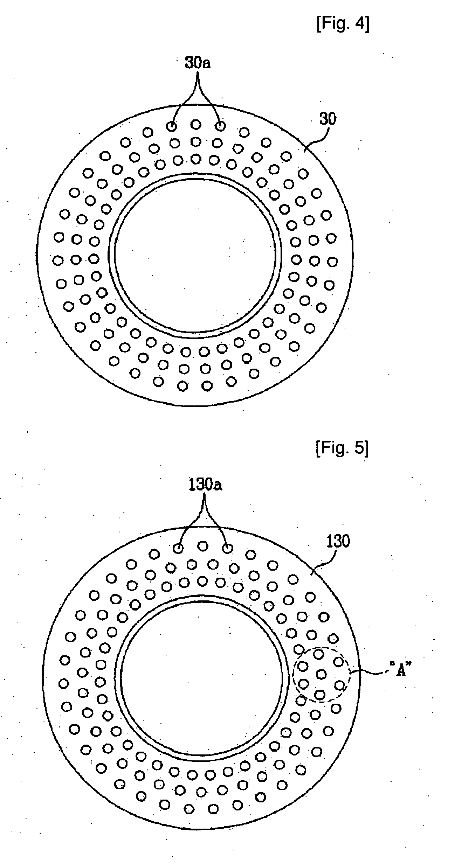

In more detail, referring to FIG. 4, the hot air pass through holes 30a in the front of the drum 30 are arranged in concentric circles in a circumferential direction as the holes go from an inner side to an outer side of the radial direction, with the hot air pass through holes 30a in each of the concentric circles are aligned in a line in the radial direction.

That is, referring to FIG. 4, the hot air pass through holes 30a in each of the concentric circles are arranged such that the hot air pass through holes 30a in each of the concentric circles are in the same line drawn outward from a center of the drum 30 in the radial direction.

Referring to FIG. 5, the hot air pass through holes 30a in the front of the drum 30 are arranged to form concentric circles in a circumferential direction as the hot air pass through holes 30a go from an inner side to an outer side in the radial direction, not in a radial line drawn outward from the center of the drum in the radial direction, but in a zigzag form along the radial line.

In the meantime, the drying duct 40 is fixedly secured to an outside of a top side of the tub 20 with fastening members, such as screws, with a heat shielding plate 43 between the tub 20 and the drying duct 40 for shielding transmission of heat from the drying duct 40 to the tub 20.

That is, the heat shielding plate 43 is fastened to the outside of the tub 20, and the drying duct 40 is fastened to the heat shielding plate 43 with fastening members, such as screws, in a state the heat shielding plate is secured to the tub.

In the meantime, even though it is preferable that the drum 30 is rotated by direct coupling type outer rotor type BLDC motor including a shaft 61 passed through the tub 20 and coupled to the drum 30, a rotor 62 coupled to a rear end portion of the shaft 61, and a stator 63 secured to a rear wall of the tub 20 so as to be positioned on an inner side of the rotor 62, the rotating system of the drum 30 is not limited to above.

There may be heat dissipation means, such as heat dissipation fins 44, on an upper surface of the drying duct 40 for increasing a heat dissipation area to prevent the upper surface of the drying duct from overheating.

The operation of the drum type washing machine having a laundry drying function of the present invention will be described.

The tub 20 has the hot air inlet hole 20a in the upper portion of the front of the tub 20, and the hot air outlet hole 20b in the lower portion of the rear of the tub 20, making the hot air to flow in a diagonal direction in the tub 30, enabling the hot air to reach deep into an inside of the drum uniformly throughout the drum to dry the laundry uniformly.

The hot air pass through holes 30a in the front surface of the drum 30, opposite to the hot air inlet hole 20a in the upper portion of the front of the tub 20, are arranged in concentric circles, in the same line drawn outward from a center of the drum 30 in the radial direction as shown in FIG. 4, or in a zigzag form along the radial direction as shown in FIG. 5.

That is, the hot air pass through holes in the front of the drum 30 are arranged such that a flow passage cross sectional area is the maximum while strength of the front of the drum 30 is not impaired.

The effective arrangement of the hot air pass through holes 30a throughout the entire front surface of the drum 30, such that the hot air inlet hole 20a and the hot air pass through holes 30a are in communication even if the drum 30 rotates, enables supply of the hot air to an inside of the drum 30 smoothly through the hot air pass through holes 30a in the front of the drum 30.

In the meantime, the heat shielding plate 43 under the drying duct 40 shields transmission of heat from the drying duct 40 to the tub 20.

Along with this, the drying duct 40 fixed to the outside surface of the tub with the heat shielding plate 43 there between permits to dispense with the gasket at a connection portion of the drying duct 40 and the tub 20 for absorbing vibration. This is because the drying duct 40 fixed to the tub 20 moves together with the tub 20 when the tub 20 vibrates or shakes.

Of course, it is apparent that a person in this field of art knows that a sealing member may be mounted at the connection portion of the drying duct 40 and the tub 20 for preventing heat from leaking from the drying duct 40.

In the meantime, as the condensing duct 50 is secured to the rear of the tub 20 directly too, no gasket is required at a connection portion of the condensing duct 50 and the tub 20 for absorbing the vibration.

A drying process of the drum type washing machine having a laundry drying function will be described.

Upon starting the drying cycle of the drum type washing machine, power is applied both to the heater 41 in the drying duct 40 and the fan 42, to produce hot air.

The hot air produced thus in the drying duct 40 is introduced into the drum 30 through the hot air inlet hole 20a in the front of the tub 20 and the hot air pass through holes 30a in the front of the drum 30.

In this instance, because the hot air pass through holes 30a are arranged throughout the front surface of the drum so as to maximize the flow passage sectional area while strength of the front of the drum 30 is not impaired, and to position the hot air pass through holes 30a opposite to the hot air inlet hole 20a even if the drum 30 rotates, the hot air introduced into the inside of the tub 20 through the hot air inlet hole 20a can be introduced into an inside of the drum 30 directly without going around through other path.

Then, the hot air introduced into the drum 30 proceeds toward the hot air outlet hole 20b in the tub in a diagonal direction, and absorbs moisture from the laundry, thereby drying the laundry.

In this instance, since the drum rotates slowly to turn the laundry upside down, to expose the laundry to the hot air uniformly, the laundry drying efficiency is improved.

By rotating the drum 30 slowly, to turn the laundry upside down, and, in this state, raising the rotating speed of the drum 30 to a level at which the laundry does not separate from an inside surface of the drum 30, a time period of contact between the hot air introduced into the inside of the drum 30 and the laundry can be increased, adequately.

In the meantime, the hot air, finishing the drying, is discharged to the condensing duct 50 without temperature drop in a state the hot air contains the moisture, wherein, as the condensing duct 50 is connected to the lower portion of the rear of the tub 20 which is diagonal to the upper portion of the drum 30 into which the hot air is introduced, the air can be discharged out of the drum 30 more smoothly through the condensing duct 50.

That is, because, while the air at the hot air inlet hole 20a in the front of the tub 20 is light and warm, the air at the hot air outlet hole 20b in the rear of the tub 20 is relatively heavy and cold, a flow passage structure of the present invention, in which the hot air inlet hole 20a is formed in the upper portion of the front of the tub 20 and the hot air outlet hole 20b is formed in a lower portion of the rear of the tub 20, meets to a natural air circulating principle.

Different from the related art, since the hot air is discharged in a state the hot air passes through the drum 30 completely, enabling the hot air to reach to the laundry at a deep place of the drum, the drum type washing machine of the present invention can improve the drying effect.

Moreover, the supply of cold water to the condensing duct 50 from the water supply device 51 for the moisture laden air introduced into the condensing duct 50 from the hot air outlet hole 20b enables removal of the moisture from the moisture laden air in the condensing duct 50 owing to a condensing action of the cold water.

The air dried at the condensing duct 50 is introduced into the drying duct 40 by the fan 42 in the drying duct 40, heated with the heater 41 in the drying duct 40, and introduced into the drum 30 by the fan 42, again.

By repeating above process, the laundry is dried.

In the meantime, different from the foregoing embodiment, the drying duct 40 and/or the condensing duct 50 may be fixedly secured to the cabinet, while the drying duct 40 and/or the condensing duct 50 is connected to the tub 20.

That is, though not shown, in this case, most of configuration is identical to the foregoing embodiment except that the drying duct 40 and/or the condensing duct 50 is secured to the cabinet 10.

For an example, if the drying duct 40 is secured to the cabinet 10, there is a flexible gasket (not shown) at a connection portion of the drying duct 40 and the hot air inlet hole 20a in the tub 20, for preventing the connection portion suffering from damage or breakage of the connection due to vibration at the tub 20.

Of course, the configuration of the gasket on the drying duct 40 side is also applicable a case of the condensing duct 50 and the hot air outlet hole 20b in the tub 20, if the condensing duct 50 is secured to the cabinet 10.

In the meantime, though not shown, a plurality of hot air inlet holes 20a may be formed in the front of the tub 20, and a plurality of hot air outlet holes 20b may be formed in the rear of the tub 20, and, in correspondence to this change, the drying duct 40 is branched into a plurality of branches at an outlet side, for connection to the plurality of hot air inlet holes 20a in the tub, and the condensing duct 50 is branched into a plurality of branches at an inlet side, for connection to the plurality of hot air outlet holes 20b in the tub, for increasing a circulating rate of the hot air.

In the meantime, referring to FIG. 5, the hot air pass through holes 30a in the front of the drum 130 may be arranged to form concentric circles in a circumferential direction as the hot air pass through holes 30a go from an inner side to an outer side in the radial direction, in a zigzag form along the radial line, in other words, in a continuous arrangement of honeycomb type of hot air pass through holes 130a as shown in "A" part in FIG. 5.

### Industrial Applicability

The drum type washing machine of the present invention having the drying system with a new flow passage structure has significant industrial applicability.

## Claims

1. A drum type washing machine having a laundry drying function comprising:
a tub (20) for receiving hot air through a front, and discharging the hot air;
a drum (30) rotatably mounted in the tub (20);
a drying duct (40) for guiding the hot air to a hot air inlet side of the tub (20);
a heater (41) for producing the hot air, and a fan (42) for forced circulation of the hot air to a drum side;
a condensing duct (50) for removing moisture from the hot air, **characterized in that**:
- the drying duct (40) is connected to a hot air inlet hole (20a) arranged in the upper portion of the front of the tub (20);
- the condensing duct (50) is adapted to remove moisture from a hot air outlet hole (20b) arranged in a lower portion of the rear of the tub (20); and
- a heat shielding plate (43) is arranged between the tub (20) and the drying duct (40) for shielding transmission of heat from the drying duct (40) to the tub (20).

2. The drum type washing machine as claimed in claim 1 wherein the drum (30) includes hot air pass through holes (30a) in a front of the drum (30) for introduction of the hot air passed through the hot air inlet hole (30) into an inside of the drum (30).

3. The drum type washing machine as claimed in claim 1, further comprising heat dissipation fins on an upper surface of the drying duct (40) for preventing the upper surface from overheating.

4. The drum type washing machine as claimed in claim 1, wherein there are a plurality of hot air pass through holes in the front of the drum arranged in a radial shape.

5. The drum type washing machine as claimed in claim 1, wherein the tub (20) has a substantially cylindrical form, and the drum (30) has hot air pass through holes (30a) in a front thereof for introduction of the hot air passed through the hot air inlet hole in the tub (20) into an inside of the drum (30).

6. The drum type washing machine as claimed in claim 1 or 5, wherein the tub (20) is a plastic injection molding.

7. The drum type washing machine as claimed in claim 5, wherein the drum (30) is formed of stainless steel.

8. The drum type washing machine as claimed in claim 1 or 3, wherein the drying duct (40) is fixedly secured to an outside of the tub (20).

9. The drum type washing machine as claimed in claim 1 or 5, wherein the drying duct (40) is fixedly secured to a cabinet (10).

10. The drum type washing machine as claimed in claim 9, further comprising a flexible gasket between the drying duct (40) and the hot air inlet hole (20a) in the tub (20).

11. The drum type washing machine as claimed in claim 1 or 5 wherein the heater (41) and/ or the fan (42) are mounted in the drying duct (40).

12. The drum type washing machine as claimed in claim 5, wherein the hot air pass through holes (30a) in the front of the drum (30) are arranged in a radial shape.

13. The drum type washing machine as claimed in claim 2 or 12 wherein the hot air pass through holes (30a) in the front of the drum (30) are arranged in concentric circles in a circumferential direction, and in a line in a radial direction.

14. The drum type washing machine as claimed in claim 2 or12 wherein the hot air pass through holes (30a) in the front of the drum are arranged in concentric circles in a circumferential direction, and in a zigzag shape in a radial direction.

15. The drum type washing machine as claimed in claim 5, wherein the tub (20) includes a plurality of hot air inlet holes (20a) and a plurality of hot air outlet holes (20b) the drying duct (40) connected to the hot air inlet holes (20a) in the tub (30) includes a plurality of branches at an outlet side thereof, and the condensing duct (50) connected to the hot air outlet holes (20b) in the tub (20) includes a plurality of branches at an inlet side thereof, so that the branched outlet side of the drying duct (40) and branched inlet side of the condensing duct (50) are connected to the hot air inlet holes (20a) in the tub (20) and the hot air outlet holes (20b) the tub (20) respectively.

16. The drum type washing machine as claimed in claim 5 , further comprising: a BLDC motor mounted in rear of the tub, (20) the BLDC motor being directly coupled to the drum (30).

## Patentansprüche

1. Trommelwaschmaschine mit einer Wäschetrocknerfunktion, die aufweist:
einen Bottich (20) zum Empfangen von Heißluft durch eine Vorderseite und zum Ausstoßen der Heißluft;
eine Trommel (30), die drehbar im Bottich (20) angebracht ist;
einen Trockenkanal (40) zum Leiten der Heißluft zu einer Heißlufteinlaßseite des Bottichs (20);
eine Heizvorrichtung (41) zur Erzeugung der Heißluft, und einen Ventilator (42) zur Zwangsumwälzung der Heißluft zu einer Trommelseite;
einen Kondensationskanal (50) zur Entfernung von Feuchtigkeit aus der Heißluft, **dadurch gekennzeichnet, daß**:
- der Trockenkanal (40) mit einem Heißlufteinlaßloch (20a) verbunden ist, das im oberen Abschnitt der Vorderseite des Bottichs (20) angeordnet ist;
- der Kondensationskanal (50) eingerichtet ist, Feuchtigkeit aus einem Heißluftauslaßloch (20b) zu entfernen, das in einem unteren Abschnitt der Rückseite des Bottichs (20) angeordnet ist; und
- eine Wärmeabschirmplatte (43) zwischen dem Bottich (20) und dem Trockenkanal (40) zur Abschirmung einer Wärmeübertragung vom Trockenkanal (40) zum Bottich (20) angeordnet ist.

2. Trommelwaschmaschine nach Anspruch 1, wobei die Trommel (30) Heißluftdurchgangslöcher (30a) in einer Vorderseite der Trommel (30) zur Einleitung der Heißluft, die durch das Heißlufteinlaßloch (20a) gegangen ist, in ein Inneres der Trommel (30) aufweist.

3. Trommelwaschmaschine nach Anspruch 1, die ferner Wärmeableitungsrippen an einer Oberseite des Trockenkanals (40) aufweist, um zu verhindern, daß sich die Oberseite überhitzt.

4. Trommelwaschmaschine nach Anspruch 1, wobei es mehrere Heißluftdurchgangslöcher in der Vorderseite der Trommel gibt, die in einer Radialform angeordnet sind.

5. Trommelwaschmaschine nach Anspruch 1, wobei der Bottich (20) eine im wesentlichen zylindrische Form aufweist und die Trommel (30) Heißluftdurchgangslöcher (30a) in einer Vorderseite davon zur Einleitung der Heißluft, die durch das Heißlufteinlaßloch im Bottich (20) gegangen ist, in ein Inneres der Trommel (30) aufweist.

6. Trommelwaschmaschine nach Anspruch 1 oder 5, wobei der Bottich (20) aus einem Kunststoffspritzguß besteht.

7. Trommelwaschmaschine nach Anspruch 5, wobei die Trommel (30) aus rostfreiem Stahl ausgebildet ist.

8. Trommelwaschmaschine nach Anspruch 1 oder 5, wobei der Trockenkanal (40) fest an einer Außenseite des Bottichs (20) gesichert ist.

9. Trommelwaschmaschine nach Anspruch 1 oder 5, wobei der Trockenkanal (40) fest an einem Gehäuse (10) gesichert ist.

10. Trommelwaschmaschine nach Anspruch 9, die ferner eine flexible Dichtung zwischen dem Trockenkanal (40) und dem Heißlufteinlaßloch (20a) im Bottich (20) aufweist.

11. Trommelwaschmaschine nach Anspruch 1 oder 5, wobei die Heizvorrichtung (41) und/oder der Ventilator (42) im Trockenkanal (40) angebracht sind.

12. Trommelwaschmaschine nach Anspruch 5, wobei die Heißluftdurchgangslöcher (30a) in der Vorderseite der Trommel (30) in einer Radialform angeordnet sind.

13. Trommelwaschmaschine nach Anspruch 2 oder 12, wobei die Heißluftdurchgangslöcher (30a) in der Vorderseite der Trommel (30) in eine Umfangsrichtung in konzentrischen Kreisen und in eine radiale Richtung in einer Linie angeordnet sind.

14. Trommelwaschmaschine nach Anspruch 2 oder 12, wobei die Heißluftdurchgangslöcher (30a) in der Vorderseite der Trommel in eine Umfangsrichtung in konzentrischen Kreisen und in eine radiale Richtung in einer Zickzackform angeordnet sind.

15. Trommelwaschmaschine nach Anspruch 5, wobei der Bottich (20) mehrere Heißlufteinlaßlöcher (20a) und mehrere Heißluftauslaßlöcher (20b) aufweist, der Trockenkanal (40), der mit den Heißlufteinlaßlöchern (20a) im Bottich (20) verbunden ist, an einer Auslaßseite davon mehrere Abzweige aufweist, und der Kondensationskanal (50), der mit den Heißluftauslaßlöchern (20b) im Bottich (20) verbunden ist, an einer Einlaßseite davon mehrere Abzweige aufweist, so daß die verzweigte Auslaßseite des Trockenkanals (40) und die verzweigte Einlaßseite des Kondensationskanals (50) mit den Heißlufteinlaßlöchern (20a) im Bottich (20) bzw. den Heißluftauslaßlöchern (20b) im Bottich (20) verbunden sind.

16. Trommelwaschmaschine nach Anspruch 5, die ferner aufweist: einen bürstenlosen Gleichstrommotor, der hinter dem Bottich (20) angebracht ist, wobei der bürstenlose Gleichstrommotor direkt mit der Trommel (30) gekoppelt ist.

## Revendications

1. Lave-linge du type à tambour ayant une fonction de séchage de linge, comprenant :
◆ une cuve (20) pour recevoir de l'air chaud à travers une partie avant, et évacuer l'air chaud ;
◆ un tambour (30) monté de manière à pivoter dans la cuve (20) ;
◆ un conduit de séchage (40) pour guider l'air chaud vers un côté d'admission d'air chaud de la cuve (20) ;
◆ un dispositif chauffant (41) pour produire l'air chaud, et un ventilateur (42) pour la circulation forcée de l'air chaud vers un côté du tambour ;
◆ un conduit à condensation (50) pour retirer l'humidité de l'air chaud, **caractérisé en ce que** :
◆ le conduit de séchage (40) est raccordé à un orifice d'admission d'air chaud (20a) agencé dans la partie supérieure de l'avant de la cuve (20) ;
◆ le conduit à condensation (50) est adapté pour retirer l'humidité depuis un orifice de sortie d'air chaud (20b) agencé dans une partie inférieure de l'arrière de la cuve (20) ; et
◆ une plaque de protection contre la chaleur (43) est agencée entre la cuve (20) et le conduit de séchage (40) pour protéger la cuve (20) contre la transmission de chaleur à partir du conduit de séchage (40).

2. Lave-linge du type à tambour selon la revendication 1, dans lequel le tambour (30) comprend un passage d'air chaud à travers des trous (30a) situés dans une partie avant du tambour (30) pour l'introduction de l'air chaud admis à travers l'orifice d'admission d'air chaud (20a) dans un intérieur du tambour (30).

3. Lave-linge du type à tambour selon la revendication 1, comprenant en outre des ailettes de dissipation de chaleur sur une surface supérieure du conduit de séchage (40) pour empêcher la surface supérieure de se surchauffer.

4. Lave-linge du type à tambour selon la revendication 1, dans lequel il y a une pluralité de trous traversants de passage d'air chaud dans la partie avant du tambour, agencés radialement.

5. Lave-linge du type à tambour selon la revendication 1, dans lequel la cuve (20) a une forme sensiblement cylindrique, et le tambour (30) a des trous traversants de passage d'air chaud (30a) dans une partie avant de celui-ci pour l'introduction dans un intérieur du tambour (30) de l'air chaud admis à travers l'orifice d'admission d'air chaud situé dans la cuve (20).

6. Lave-linge du type à tambour selon la revendication 1 ou 5, dans lequel la cuve (20) est un moule d'injection en plastique.

7. Lave-linge du type à tambour selon la revendication 5, dans lequel le tambour (30) est fait d'acier inoxydable.

8. Lave-linge du type à tambour selon la revendication 1 ou 5, dans lequel le conduit de séchage (40) est assujetti à un extérieur de la cuve (20).

9. Lave-linge du type à tambour selon la revendication 1 ou 5, dans lequel le conduit de séchage (40) est assujetti à un compartiment (10).

10. Lave-linge du type à tambour selon la revendication 9, comprenant en outre un joint flexible entre le conduit de séchage (40) et l'orifice d'admission d'air chaud (20a) situé dans la cuve (20).

11. Lave-linge du type à tambour selon la revendication 1 ou 5, dans lequel le dispositif chauffant (41) et/ou le ventilateur (42) sont montés dans le conduit de séchage (40).

12. Lave-linge du type à tambour selon la revendication 5, dans lequel les trous traversants de passage d'air chaud (30a) situés dans la partie avant du tambour (30) sont agencés radialement.

13. Lave-linge du type à tambour selon la revendication 2 ou 12, dans lequel les trous traversants de passage d'air chaud (30a) situés dans la partie avant du tambour (30) sont agencés en des cercles concentriques dans un sens circonférentiel et en ligne droite dans un sens radial.

14. Lave-linge du type à tambour selon la revendication 2 ou 12, dans lequel les trous traversants de passage d'air chaud (30a) situés dans la partie avant du tambour sont agencés en des cercles concentriques dans un sens circonférentiel et en zigzag dans un sens radial.

15. Lave-linge du type à tambour selon la revendication 5, dans lequel la cuve (20) comprend une pluralité d'orifices d'admission d'air chaud (20a) et une pluralité d'orifices de sortie d'air chaud (20b), le conduit de séchage (40) raccordé aux orifices d'admission d'air chaud (20a) dans la cuve (20) comprend une pluralité de branchements à un côté de sortie de celui-ci, et le conduit à condensation (50) raccordé aux orifices de sortie d'air chaud (20b) dans la cuve (20) comprend une pluralité de branchements dans un côté d'admission de celui-ci, de sorte que le côté de sortie ramifié du conduit de séchage (40) et le côté d'admission ramifié du conduit à condensation (50) sont raccordés aux orifices d'admission d'air chaud (20a) dans la cuve (20) et aux orifices de sortie d'air chaud (20b) dans la cuve (20), respectivement.

16. Lave-linge du type à tambour selon la revendication 5, comprenant en outre un moteur à courant continu sans balais (BLDC) monté à l'arrière de la cuve (20), le moteur BLDC étant directement couplé au tambour (30).
